# FASCICULE DE BREVET EUROPEEN

(11) **EP 1 023 161 B1**
(45) Date de publication et mention de la délivrance du brevet: **15.10.2003**
(21) Numéro de dépôt: 99934787.5
(22) Date de dépôt: 28.07.1999
(51) Int. Cl.: B32B 1/08, F16L 11/12, F16L 11/08, F16L 11/04

(54) **PRODUIT COMPOSITE THERMOPLASTIQUE-ELASTOMERE**
VERBUNDPRODUKT AUS THERMOPLAST UND ELASTOMER
COMPOSITE THERMOPLASTIC-ELASTOMER PRODUCT

(30) Priorité: 31.07.1998 FR 9809848
(43) Date de publication de la demande: 02.08.2000
(73) Titulaire: HUTCHINSON, 75008 Paris (FR)
(72) Inventeur: GUO, Laina, F-45200 Montargis (FR); MOUNIER, Jean-Yves, F-45200 Paucourt (FR)
(74) Mandataire: Vialle-Presles, Marie José
(86) Numéro de dépôt international: FR9901852
(87) Numéro de publication internationale: WO00007810

(56) Documents cités:
- EP-A- 0 818 477
- WO-A-94/19638
- DE-A- 19 531 224
- US-A- 5 413 147
- US-A- 5 488 974
- DATABASE WPI Section Ch, Week 9615 Derwent Publications Ltd., London, GB; Class A18, AN 96-146991 XP002098409 & JP 08 034886 A (TOKAI RUBBER IND LTD), 6 février 1996 (1996-02-06)
- PATENT ABSTRACTS OF JAPAN vol. 015, no. 193 (C-0832), 17 mai 1991 (1991-05-17) & JP 03 050262 A (NITTA IND CORP;OTHERS: 01), 4 mars 1991 (1991-03-04)

## Description

L'invention concerne un produit composite thermoplastique-élastomère tel par exemple qu'un tuyau de transport de réfrigérant pour circuit de climatisation de véhicule automobile.

Ces produits doivent respecter des normes de plus en plus sévères, notamment en ce qui concerne leur tenue thermique (interne et externe), leur résistance aux agents extérieurs et, quand il s'agit de tuyaux, de leur imperméabilité vis-à-vis du fluide transporté. De plus, leur durée de vie doit être aussi longue que possible et leurs qualités d'étanchéité et d'imperméabilité doivent être maintenues pendant toute cette durée de vie.

Il a été proposé à de nombreuses reprises de réaliser des tuyaux composites thermoplastique-élastomère pour le transport de fluides dans l'industrie automobile, ces tuyaux comprenant en général une couche interne de polyamide, une couche d'élastomère recouvrant le polyamide, un renfort textile et une couche externe de protection en caoutchouc ou en élastomère.

Il faut souvent, dans ces tuyaux connus, réaliser un compromis entre la souplesse désirée et l'imperméabilité au fluide transporté et l'on doit en outre interposer une couche mince d'une matière adhésive appropriée entre le thermoplastique et l'élastomère pour assurer leur adhérence.

Dans le cas des tuyaux de transport de réfrigérant pour circuit de climatisation, il est nécessaire d'améliorer l'imperméabilité au fluide transporté (les fluides réfrigérants utilisés jusqu'à présent et qui contenaient des CFC sont remplacés par des HFC connus sous la dénomination R134a, associés à un lubrifiant du type polyalkylène glycol) et l'on a par exemple proposé pour cette couche interne un mélange de polyamide, d'une polyoléfine modifiée par greffage et d'ε-caprolactame, mais cette composition n'adhère pas à la couche d'élastomère qui la recouvre. De plus, la quantité d'ε-caprolactame utilisée est un compromis entre souplesse et imperméabilité au fluide, l'addition d'ε-caprolactame permettant d'améliorer la souplesse au détriment de l'imperméabilité.

C'est pourquoi la Demanderesse s'est donné pour but de pourvoir à un produit composite qui réponde mieux aux besoins de la pratique notamment en ce qu'il présente une adhérence totale entre le thermoplastique et l'élastomère, ainsi qu'une excellente imperméabilité aux fluides transportés (dans le cas d'un tuyau) et notamment aux nouveaux fluides réfrigérants qui sont utilisés dans les circuits de climatisation pour véhicule automobile.

L'invention propose, à cet effet, un produit composite comprenant une couche interne d'un mélange d'un thermoplastique et d'un agent modifiant, recouverte d'une couche d'un mélange d'un élastomère et d'un agent modifiant, caractérisé en ce que :
- la couche interne est essentiellement constituée d'un alliage de plastique comprenant un thermoplastique choisi parmi les polyamides (PA) et au moins un agent modifiant choisi parmi les terpolymères éthylène-acrylate-acide acrylique, les proportions thermoplastique/terpolymère éthylène-acrylate-acide acrylique étant comprises entre 10/90 et 49/51 (en poids) et
- l'élastomère est choisi parmi le caoutchouc naturel (polyisoprène ou NR), le polyisoprène synthétique (IR), les caoutchoucs nitriles (NBR), les caoutchoucs nitriles halogénés, les caoutchoucs nitriles hydrogénés, les copolymères d'épichlorydrine et d'oxyde d'éthylène (ECO), les élastomères éthylène-acide acrylique, les caoutchoucs butyles (copolymère isoprène-isobutylène ou IIR), les caoutchoucs butyles halogénés (XIIR), les élastomères isobutylène-p-méthylstyrène para-bromométhylstyrène, les terpolymères d'éthylène, de propylène et d'un diène (EPDM) et les copolymères d'éthylène et de propylène (EPM), le polyéthylène chloré (CM), le polyéthylène chlorosulfoné (CSM), le polyéthylène chlorosulfoné comportant des groupes alkyl latéraux (ACSM), le polychloroprène (CR), les polymères acryliques (ACM), les copolymères d'éthylène et d'acétate de vinyle (EVA), les copolymères d'éthylène acrylate (EAM), au moins un agent modifiant de l'élastomère étant choisi parmi les polybutadiène-vinyle-1,2 greffés à l'anhydride maléique, les polybutadiènes époxydés et/ou hydroxylés, les silanes, les élastomères éthylène-acide acrylique et les copolymères éthylène-propylène greffés à l'anhydride maléique.

Conformément à l'invention, le polyamide est sélectionné dans le groupe constitué entre autres par le polyamide 6, le polyamide 6.6, le polyamide 11, le polyamide 12, le polyamide 6/10 et le polyamide 6/12.

On a constaté que, dans ces produits, l'adhérence thermoplastique - élastomère est totale sans qu'il soit nécessaire d'utiliser une couche intermédiaire d'un adhésif, et qu'il est impossible de séparer sans les détruire les couches de thermoplastique et d'élastomère.

On a également constaté que dans la mesure où les proportions d'agents modifiants dans le thermoplastique sont toujours supérieures aux quantités de thermoplastique, ils forment avec ce dernier un alliage de plastique dont la fabrication est significativement améliorée dans la mesure où l'on peut obtenir une dispersion beaucoup plus homogène que celles obtenues avec les thermoplastiques modifiés de l'art antérieur dans lesquels les quantités d'agents modifiants sont généralement inférieures à celles du thermoplastique ; une telle dispersion homogène permet notamment d'obtenir des pièces fabriquées par extrusion, de très bonne qualité, l'élastomère et/ou le thermoplastique comprenant avantageusement plusieurs agents modifiants.

Les proportions d'agents modifiants dans l'élastomère peuvent varier très largement et sont comprises, de façon générale, entre 0,5 et 50 % environ.

Le thermoplastique et/ou l'élastomère utilisés peuvent également comprendre au moins des charges, organiques ou inorganiques, ainsi que des plastifiants usuels.

L'invention propose également un tuyau de transport de fluide réfrigérant pour circuit de climatisation de véhicule automobile, comprenant une couche interne du thermoplastique et une couche de l'élastomère qui viennent d'être décrits et dans lequel l'épaisseur de la couche interne de thermoplastique est d'environ 0,05 à 2 mm, celle de la couche d'élastomère étant d'environ 0,2 à 3 mm.

Un tel tuyau comprend de plus une ou plusieurs couches de textiles de renforcement recouvrant la couche d'élastomère et recouverte elle-même d'une couche de protection en élastomère.

Une couche mince d'élastomère peut également être prévue sur la face interne de la couche de thermoplastique, pour améliorer l'étanchéité du montage du tuyau sur un embout de connexion.

Dans un mode de réalisation préféré de l'invention, le thermoplastique précité est un mélange de 35 à 45 % (p/p) de polyamide, de préférence du polyamide 6 et de 55 à 65 % (p/p) d'un terpolymère d'éthylène, d'acide acrylique et d'acrylate.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe d'un produit composite selon l'invention,
- la figure 2 est une vue schématique partielle en perspective d'un tuyau selon l'invention.

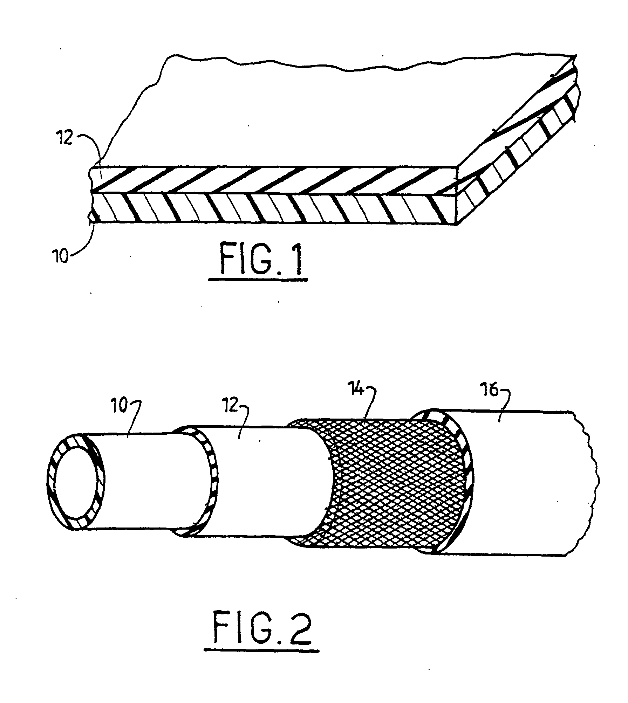

Le produit composite selon l'invention qui est représenté schématiquement en figure 1, comprend une couche 10 de thermoplastique recouverte d'une couche 12 d'élastomère, l'adhérence de ces deux couches l'une à l'autre étant telle que toute tentative de séparation de ces deux couches se traduit par la destruction de l'une et/ou de l'autre de ces couches.

Le thermoplastique de la couche 10 peut être choisi parmi les composés suivants : PA 6, PA 6.6, PA 11, PA 12, PA 6/10, PA 6/12, en mélange avec un terpolymère éthylène-acrylate-acide acrylique dans des proportions comprises entre 10/90 et 49/51 (p/p). Cet agent modifiant peut éventuellement être associé à d'autres agents modifiants.

La couche 12 d'élastomère est à base d'un élastomère choisi parmi les composés suivants : NR, IR, NBR, XNBR, HNBR, ECO, EPDM, EPM, CM, CSM, ACSM, CR, ACM, EVA, EAM, les copolymères éthylène-acide acrylique, les caoutchouc butyles, butyles halogénés et isobutylène-p-méthylstyrène para-bromométhylstyrène, avec addition d'au moins un des agents modifiants suivants : polybutadiène-vinyle-1,2 greffé à l'anhydride maléique à l'acide carboxylique ou les polybutadiènes époxydés et/ou hydroxylés, des silanes, des copolymères éthylène-acide acrylique, des copolymères éthylène-propylène greffés à l'anhydride maléique.

On peut ajouter plusieurs de ces agents modifiants à l'élastomère, dans une proportion comprise entre 0,5 et 50% en poids.

Le tuyau représenté schématiquement en figure 2 est destiné au transport d'un fluide réfrigérant du type HFC utilisé dans les circuits de climatisation de véhicule automobile et comprend une couche interne 10 de thermoplastique ayant la même composition que la couche 10 de la figure 1, une couche 12 d'élastomère entourant la couche 10 de thermoplastique et ayant la composition de la couche 12 de la figure 1, un renfort textile 14 entourant la couche d'élastomère 12, ce renfort textile pouvant être une tresse de fils de polyester, de polyamide, etc..., et une couche 16 de protection, réalisée en un élastomère approprié qui peut être du même type que celui de la couche 12 ou différent.

Typiquement, l'épaisseur de la couche interne 10 à base de thermoplastique est de l'ordre de 0,1 à 0,3 mm et celle de la couche 12 à base d'élastomère est de 0,5 à 2 mm environ.

Une couche mince d'élastomère peut recouvrir la surface interne de la couche 10 à base de thermoplastique, pour améliorer l'étanchéité du montage du tuyau sur un embout de connexion ou analogue.

Par exemple, les compositions des couches 10 et 12 du tuyau de la figure 2 peuvent être les suivantes :
- couche 10 :
   - PA6 41 parts en poids
   - terpolymère éthylène-acrylate-acide acrylique 59 parts en poids
      (DU PONT DE NEMOURS (ZYTEL® ST 7301) ; BASF (LUCALEN® 2920), par exemple)
- couche 12 :
   . caoutchouc butyle bromé 100 parts en poids
   . noir de carbone 80 parts en poids
   . résine phénolique réactive 9 parts en poids
   . plastifiant 5 parts en poids
   . polybutadiène vinyle 1,2 greffé à l'anhydride maléique 5 parts en poids.
      ou
   . isobutylène-p-méthylstyrène para-bromo- méthylstyrène 100 parts en poids
   . noir de carbone 80 parts en poids
   . plastifiant 5 parts en poids
   . ZnO 2 parts en poids
   . ZDBC 2 parts en poids
   . polybutadiène vinyle 1,2 greffé à l'anhydride maléique 5 parts en poids.

## Revendications

1. Produit composite comprenant une couche d'un mélange d'un thermoplastique et d'un agent modifiant, recouverte d'une couche d'un mélange d'un élastomère et d'un agent modifiant, **caractérisé en ce que** :
- la couche est essentiellement constituée d'un alliage de plastique comprenant un thermoplastique choisi parmi les polyamides (PA) et au moins un agent modifiant choisi parmi les terpolymères éthylène-acrylate-acide acrylique, les proportions thermoplastique/ terpolymère éthylène-acrylate-acide acrylique étant comprises entre 10/90 et 49/51 (en poids) et
- l'élastomère est choisi parmi le caoutchouc naturel (polyisoprène ou NR), le polyisoprène synthétique (IR), les caoutchoucs nitriles (NBR), les caoutchoucs nitriles halogénés, les caoutchoucs nitriles hydrogénés, les copolymères d'épichlorydrine et d'oxyde d'éthylène (ECO), les élastomères éthylène-acide acrylique, les caoutchoucs butyles (copolymère isoprène-isobutylène ou IIR), les caoutchoucs butyles halogénés (XIIR), les élastomères isobutylène-p-méthylstyrène para-bromométhylstyrène, les terpolymères d'éthylène, de propylène et d'un diène (EPDM) et les copolymères d'éthylène et de propylène (EPM), le polyéthylène chloré (CM), le polyéthylène chlorosulfoné (CSM), le polyéthylène chlorosulfoné comportant des groupes alkyl latéraux (ACSM), le polychloroprène (CR), les polymères acryliques (ACM), les copolymères d'éthylène et d'acétate de vinyle (EVA), les copolymères d'éthylène acrylate (EAM), au moins un agent modifiant de l'élastomère étant choisi parmi les polybutadiène-vinyle-1,2 greffés à l'anhydride maléique, les polybutadiènes époxydés et/ou hydroxylés, les silanes, les élastomères éthylène-acide acrylique et les copolymères éthylène-propylène greffés à l'anhydride maléique.

2. Produit selon la revendication 1, **caractérisé en ce que** le polyamide est sélectionné dans le groupe constitué par le polyamide 6, le polyamide 6.6, le polyamide 11, le polyamide 12, le polyamide 6/10 et le polyamide 6/12.

3. Produit selon la revendication 1 ou la revendication 2, **caractérisé en ce que** la proportion d'agent modifiant dans l'élastomère est comprise entre 0,5 et 50 % environ en poids.

4. Produit selon l'une quelconque des revendications 1 à 3, **caractérisé en ce que** l'élastomère et/ou le thermoplastique comprend plusieurs agents modifiants précités.

5. Produit selon l'une des revendications précédentes, **caractérisé en ce que** le thermoplastique et/ou l'élastomère comprennent au moins des charges, organiques ou inorganiques, et/ou des plastifiants.

6. Produit selon l'une quelconque des revendications précédentes, **caractérisé en ce que** le thermoplastique précité est un mélange de 35 à 45 % (p/p) de polyamide, de préférence du polyamide 6 et de 55 à 65 % (p/p) d'un terpolymère d'éthylène, d'acide acrylique et d'acrylate.

7. Tuyau de transport de fluide réfrigérant pour circuit de climatisation de véhicule automobile, comprenant une couche interne de thermoplastique recouverte d'une couche d'élastomère ayant les compositions décrites dans les revendications précédentes, **caractérisé en ce que** l'épaisseur de la couche de thermoplastique est de 0,05 à 2 mm environ et celle de la couche d'élastomère de 0,2 à 3 mm environ.

8. Tuyau selon la revendication 7, **caractérisé en ce que** la couche d'élastomère est recouverte d'au moins une couche textile de renforcement et d'une couche (16) de protection, par exemple en élastomère.

9. Tuyau selon la revendication 7 ou 8, **caractérisé en ce qu'**il comprend également une couche mince d'élastomère de 0,2 à 3 mm sur la face interne de la couche de thermoplastique.

10. Tuyau selon l'une des revendications 7 à 9, **caractérisé en ce que** l'alliage de plastique de la couche interne est un mélange de polyamide 6 et d'au moins un terpolymère éthylène-acrylate-acide acrylique, l'élastomère de la couche recouvrant le thermoplastique étant à base d'isobutylène-p-méthylstyrène para-bromo- méthylstyrène modifié par au moins du polybutadiène vinyle-1,2 greffé à l'anhydride maléique.

## Patentansprüche

1. Verbundprodukt bestehend aus einer Mischung aus einem Thermoplasten und einem Modifiziermittel, die mit einer Schicht aus einer Mischung aus einem Elastomer und einem Modifiziermittel überzogen ist, **dadurch gekennzeichnet, dass**
- die Schicht im Wesentlichen aus einer Kunststoffverbindung besteht, die einen unter Polyamiden (PA) gewählten Thermoplasten und mindestens ein unter den Terpolymeren von Ethylen, Acrylat, Acrylsäure gewähltes Modifiziermittel aufweist, wobei die Anteile Thermoplast / Ethylen - Acrylat - Acrylsäure-Terpolymer zwischen 10/90 und 49/51 (in Gewicht) liegen, und
- das Elastomer ausgewählt ist aus dem natürlichen Kautschuk (Polyisopren oder NR), dem synthetischen Polyisopren (IR), den Nitrilkautschuken (NBR), den halogenhaltigen Nitrilkautschuken, den wasserstoffhaltigen Nitrilkautschuken, den Epichlorhydrin- und ethylenoxydhaltigen Copolymeren (ECO), den Ethylen - Acrylsäure-Elastomeren, den Butylkautschuken (Isopren-Isobutyl-Copolymeren oder IIR), den halogenhaltigen Butylkautschuken (XIIR), den Isobutylen - p - Methylenstyren - para - bromo - Methylenstyren-Elastomeren, den Terpolymeren des Ethylens, der Propylene und eines Dien (EPDM) und den Copolymeren des Ethylens und Propylens (EPM), den chlorierten Polyethylenen (CM), den chlorsulfonierten Polyethylenen (CSM), dem chlorsulfonierten Polyethylen mit seitlichen Alkylgruppen (ACSM), dem Polychlorpropen (CR), den Acrylpolymeren (ACM), den Copolymeren des Ethylens und des Vinylazetats (EVA), den Copolymeren des Ethylenacrylats (EAM), wobei mindestens ein elastomermodifizierendes Mittel ausgewählt ist aus auf Malein-Anhydrid aufgepfropftem Polybutadin-Vinyl-1,2, den epoxydierten und/oder hydroxylierten Polybutadinen, den Silanen, den Ethylen-Acrylsäure-Elastomeren und den Copolymeren von auf Malein-Anhydrid aufgepropftem Ethylen-Propylen.

2. Produkt nach Anspruch 1,
**dadurch gekennzeichnet, dass** das Polyamid aus der aus Polyamid 6, Polyamid 6.6, Polyamid 11, Polyamid 12, Polyamid 6/10 und Polyamid 6/12 bestehenden Gruppe ausgewählt ist.

3. Produkt nach Anspruch 1 oder 2,
**dadurch gekennzeichnet, dass** der Anteil des Modifikationsmittels im Elastomer ca. zwischen 0,5 und 50 Gew.-% beträgt.

4. Produkt nach einem der Ansprüche 1 bis 3,
**dadurch gekennzeichnet, dass** das Elastomer und/oder der Thermoplast mehrere der vorgenannten Modifikationsmittel aufweisen/aufweist.

5. Produkt nach einem der vorangehenden Ansprüche,
**dadurch gekennzeichnet, dass** der Thermoplast und/oder das Elastomer mindestens organische oder anorganische Füllmittel und/oder Plastifizierungsmittel aufweisen/aufweist.

6. Produkt nach einem der vorangehenden Ansprüche,
**dadurch gekennzeichnet, dass** der vorgenannte Thermoplast eine Mischung aus 35 bis 45 % (p/p) Polyamid, bevorzugt Polyamid 6, und aus 55 bis 65 % (p/p) eines Terpolymers aus Ethylen-, Acrylsäure und Akrylat ist.

7. Fluid-Transportschlauch für einen Kraftfahrzeug-Klimatisierungskreislauf, der eine Thermoplast-Innenschicht aufweist, die mit einer Elastomerschicht überzogen ist, die die in den vorangehenden Ansprüchen beschriebene Zusammensetzung hat,
**dadurch gekennzeichnet, dass** die Dicke der Thermoplast-Schicht ungefähr zwischen 0,05 und 2 mm, und die der Elastomerschicht zwischen ungefähr 0,2 und 3 mm liegt.

8. Schlauch nach Anspruch 7,
**dadurch gekennzeichnet, dass** die Elastomer-Schicht mit mindestens einer Verstärkungs-Textilschicht und einer zum Beispiel aus Elastomer bestehenden Schutzschicht (16) überzogen ist.

9. Schlauch nach Anspruch 7 oder 8,
**dadurch gekennzeichnet, dass** es ebenfalls eine dünne Elastomer-Schicht zwischen 0,2 und 3 mm auf der Innenseite der Thermoplast-Schicht aufweist.

10. Schlauch nach einem der Ansprüche 7 bis 9,
**dadurch gekennzeichnet, dass** die Kunststoffverbindung der Innenschicht eine Mischung aus Polyamid 6 und mindestens einem Terpolymer aus Ethylen-Acrylat-Acrylsäure- ist, wobei das Elastomer der den Thermoplasten überziehenden Schicht aus Isobutylen - p - Methylenstyren - para - bromo - Methylstyren besteht, das mindestens durch ein auf Malein-Anhydrid aufgepfropftes Polybutadin-Vinyl-1,2 modifiziert ist.

## Claims

1. Composite product comprising a layer of a mix of a thermoplastic and a modifier, said layer being covered by a layer of a mix of an elastomer and a modifier, **characterised in that**:
- the former layer is essentially constituted by an alloy of plastic comprising a thermoplastic selected from the polyamides (PA) and at least one modifier selected from the ethylene/acrylate/acrylic acid terpolymers, the ratio of thermoplastic to ethylene/acrylate/acrylic acid terpolymer being between 10/90 and 49/51 (by weight) and
- the elastomer is selected from natural rubber (polyisoprene or NR), synthetic polyisoprene (IR), nitrile rubbers (NBR), halogenated nitrile rubbers, hydrogenated nitrile rubbers, copolymers of epichlorhydrin and ethylene oxide (ECO), ethylene/acrylic acid elastomers, butyl rubbers (isoprene/isobutylene copolymer or IIR), halogenated butyl rubbers (XIIR), isobutylene-p-methylstyrene/para-bromo-methylstyrene elastomers, terpolymers of ethylene, propylene and a diene (EPDM) and copolymers of ethylene and propylene (EPM), chlorinated polyethylene (CM), chlorosulphonated polyethylene (CSM), chlorosulphonated polyethylene containing lateral alkyl groups (ACSM), polychloroprene (CR), acrylic polymers (ACM), copolymers of ethylene and vinyl acetate (EVA), copolymers of ethylene acrylate (EAM), at least one modifier of the elastomer being selected from the group comprising maleic anhydride-grafted 1,2-vinyl polybutadienes, epoxydised and/or hydroxylated polybutadienes, silanes, ethylene/acrylic acid elastomers and maleic anhydride-grafted ethylene/propylene copolymers.

2. Product according to claim 1, **characterised in that** the polyamide is selected from the group comprising polyamide 6, polyamide 6/6, polyamide 11, polyamide 12, polyamide 6/10 and polyamide 6/12.

3. Product according to claim 1 or 2, **characterised in that** the proportion of modifier in the elastomer is between approximately 0.5 and 50 % by weight.

4. Product according to any of claims 1 to 3, **characterised in that** the elastomer and/or the thermoplastic contains a plurality of aforementioned modifiers.

5. Product according to any of the preceding claims, **characterised in that** the thermoplastic and/or the elastomer contain at least organic or inorganic fillers and/or plasticisers.

6. Product according to any of the preceding claims, **characterised in that** the aforementioned thermoplastic is a mix of 35 to 45 % (by wt.) of polyamide, preferably polyamide 6, and from 55 to 65 % (by wt.) of a terpolymer of ethylene, acrylic acid and acrylate.

7. Pipe for carrying refrigerating fluid around a motor vehicle air conditioning circuit, featuring an inner, thermoplastic layer covered by an elastomer layer having the compositions described in the preceding claims, **characterised in that** the thermoplastic layer is approximately 0.05 to 2 mm thick and the elastomer layer is approximately 0.2 to 3 mm thick.

8. Pipe according to claim 7, **characterised in that** the elastomer layer is covered by at least one reinforcing textile layer and by a protective layer (16), for example of elastomer.

9. Pipe according to claim 7 or 8, **characterised in that** it also features a thin elastomer layer some 0.2 to 3 mm thick on the inner face of the layer of thermoplastic.

10. Pipe according to any of claims 7 to 9, **characterised in that** the plastic alloy of the inner layer is a mix of polyamide 6 and at least one terpolymer of ethylene/acrylate/acrylic acid, the elastomer of the layer covering the thermoplastic having an isobutylene-p-methylstyrene para-bromo-methylstyrene base modified by at least maleic anhydride-grafted 1,2 vinyl polybutadiene.
